# EUROPÄISCHE PATENTSCHRIFT

(11) **EP 3 775 502 B1**
(45) Veröffentlichungstag und Bekanntmachung des Hinweises auf die Patenterteilung: **13.04.2022**
(21) Anmeldenummer: 19729678.3
(22) Anmeldetag: 03.06.2019
(51) Int. Cl.: F01K 3/02, F01K 23/10

(54) **VERFAHREN ZUM BETREIBEN EINER KRAFTWERKSANLAGE**
METHOD FOR OPERATING A POWER PLANT
PROCÉDÉ POUR FAIRE FONCTIONNER UNE CENTRALE ÉLECTRIQUE

(30) Priorität: 22.06.2018 DE 102018210240
(43) Veröffentlichungstag der Anmeldung: 17.02.2021
(73) Patentinhaber: Siemens Energy Global GmbH & Co. KG, 81739 München (DE)
(72) Erfinder: HENNING, Michael, 91058 Erlangen (DE); WIESENMÜLLER, Wolfgang, 90762 Fürth (DE); ZEIS, Maria, 96114 Hirschaid (DE)
(86) Internationale Anmeldenummer: PCT/EP2019/064277
(87) Internationale Veröffentlichungsnummer: WO 2019/243026

(56) Entgegenhaltungen:
- EP-A1- 1 072 760
- WO-A2-2006/097495
- DE-A1-102016 113 660
- US-A- 3 879 616
- US-A1- 2014 345 278
- US-A1- 2018 038 352
- US-A1- 2018 094 546

## Beschreibung

Die Erfindung betrifft ein Verfahren zum Betreiben einer Kraftwerksanlage.

In Zukunft ist davon auszugehen, dass Anlagen zur Energieerzeugung in einem deregulierten Strommarkt verstärkt extrem flexibel bei gleichzeitig höchstmöglichem Wirkungsgrad betrieben werden müssen.

Eine höhere Flexibilität bei Gas-und Dampfturbinenanlagen kann z. B. mit leistungssteigernden Maßnahmen wie z.B. Chiller und/oder Nutzung zusätzlicher Wärmequellen, wie z. B. Zusatzfeuer und/oder Wärmespeicher, erzielt werden.

Entweder wurden diese Maßnahmen bisher von Hand nach bestem Wissen und Erfahrung des Betriebspersonals gefahren, oder es wurde eine automatische Fahrweise implementiert, die basierend auf einer komplexen Wärmebilanzrechnung über das gesamte Kraftwerk (möglicherweise mit Prozessdampfauskopplung oder Fernwärme) einen vorgesteuerten Sollwert (z.B. Feuerleistungssollwert) an ein Zusatzfeuer und/oder Ausspeicherleistung an einen Wärmespeicher berechnet hat, während ein langsamer Korrekturregler die noch verbleibende Regelabweichung (z.B. Druckregelabweichung) korrigieren musste.

Das Dokument US 3 879 616 A offenbart ein Verfahren zum Betreiben einer Kraftwerksanlage mit einer Gasturbine und einer Zusatzfeuerung nach dem Stand der Technik.

Da die genannten Maßnahmen in der Regel den Wirkungsgrad verschlechtern, ist es Aufgabe der Erfindung, ein Verfahren bereitzustellen, das den Einsatz dieser Maßnahmen so automatisiert, dass sie nur in dem wirklich benötigten Maß eingesetzt werden. Nur so ist ein höchstmöglicher Anlagen-Wirkungsgrad zu erreichen. Bei Anlagen, die im Inselbetrieb eingesetzt werden, erfordert dies, dass die leistungssteigernden Maßnahmen zudem so eingesetzt werden, dass das primäre Regelorgan (z.B. die Gasturbine zur Frequenzregelung) immer im Regelbereich gehalten wird.

Die Erfindung löst die auf ein Verfahren gerichtete Aufgabe, indem sie vorsieht, dass bei einem derartigen Verfahren zum Betreiben einer Kraftwerksanlage mit einer Gasturbine, einem der Gasturbine nachgeschalteten Abhitzedampferzeuger, einer mit dem Abhitzedampferzeuger verbundenen Dampfturbine, sowie einer zusätzlichen Wärmequelle, zum Erreichen einer vorgegebenen Kraftwerksanlagenleistung ein Drucksollwert unmittelbar vor der Dampfturbine eingestellt wird.

Dabei nutzt das erfindungsgemäße Verfahren vorteilhafterweise den Status eines primären Regelorgans, um davon abgeleitet einen entsprechenden Sollwert (den Drucksollwert) derart zu berechnen, dass die Anlage automatisch immer mit optimalem Wirkungsgrad betrieben wird.

Dabei ist es zweckmäßig, wenn das primäre Regelorgan eine Gasturbinenleistung ist.

Erfindungsgemäß ist der Drucksollwert ein Sollwert für die zusätzliche Wärmequelle.

Erfindungsgemäß wird eine im Abhitzedampferzeuger angeordnete Zusatzfeuerung als zusätzliche Wärmequelle verwendet. Damit lässt sich die Dampfleistung und damit die elektrische Leistung der Dampfturbine zuverlässig erhöhen.

In einer alternativen Ausgestaltung des erfinderischen Verfahrens wird als zusätzliche Wärmequelle zusätzlich zur Zusatzfeuerung ein Wärmespeicher verwendet. Bei Bedarf wird Wärme aus diesem Speicher ausgespeichert und dadurch der Dampfdruck vor der Dampfturbine weiter erhöht. Der Speicher kann sowohl im Abhitzedampferzeuger, als auch in Strömungsrichtung des Dampfes nach dem Abhitzedampferzeuger angeordnet sein. Außerdem kann ein solcher Wärmespeicher auch zusätzlich zu einer Zusatzfeuerung zum Einsatz kommen.

Vorteilhafter Weise wird eine Änderung im Status des primären Regelorgans über eine Verstärkung in eine Drucksollwertänderung umgerechnet, welche auf einen aktuellen Istdruck addiert wird.

Schließlich ist es vorteilhaft, wenn die zusätzliche Wärmequelle nur dann betrieben wird, wenn ein Kraftwerksanlagenleistungssollwert nicht alleine durch die Gasturbine innerhalb ihres Regelbereichs und die Dampfturbine erreicht oder gehalten werden kann.

Die Erfindung nutzt den linearen Zusammenhang zwischen Vordruck und Dampfturbinen-Leistung. Wird beispielsweise mehr Leistung benötigt und befindet sich die Gasturbine bereits entweder bei ihrer Maximalleistung oder am oberen Ende ihres vorgegebenen Regelbereiches, führt eine Erhöhung des Frischdampfdrucks mittels Zusatzfeuerung und/oder Ausspeicherung aus einem Wärmespeicher zu entsprechend mehr Dampf für die Dampfturbine. Dies wird durch eine Erhöhung des Drucksollwerts für die zusätzliche Wärmequelle auf einen Wert oberhalb des aktuellen Druckistwerts erreicht. Mit Steigerung der Dampfturbinen-Leistung wird entweder die gewünschte Mehrleistung wirkungsgradoptimal zur Verfügung gestellt oder die gewünschte Mehrleistung wirkungsgradoptimal zur Verfügung gestellt und die Gasturbine in ihrem Regelbereich gehalten.

Bei dem vorgestellten neuartigen Regelkonzept werden Änderungen im Status des primären Regelorgans über eine Verstärkung in eine Drucksollwerterhöhung umgerechnet (entspricht einer Vorsteuerung). Diese wird auf den aktuellen Istdruck addiert. Die Verstärkung kann positiv wie negativ sein, was bedeutet, dass die leistungssteigernde Maßnahme auch wieder automatisch wirkungsgradoptimal herausgefahren wird, sobald sie nicht mehr erforderlich ist.

Der Istdruck wirkt dabei als sytemimmanente, integrierende Rückführung, da er nur vom Dampfmassenstrom abhängt, der wiederum sowohl von Änderungen in der Zusatzfeuerung und/oder der Ausspeicherung aus dem Wärmespeicher als auch in der Gasturbinen-Leistung beeinflusst wird.

Ein weiteres Merkmal dieser Erfindung ist, dass durch die beschriebene Schaltung von vornherein der richtige Zielsollwert (z.B. Druck) bei korrekter Parametrierung der Verstärkung (d.h. erforderliche Druckerhöhung für benötigte Mehrleistung der Dampfturbine) punktgenau errechnet wird. Das Besondere hierbei ist, dass auch bei abweichender Parametrierung der richtige Zielsollwert infolge der oben beschriebenen Rückführung letztendlich immer automatisch punktgenau erreicht wird, dann allerdings mit kurzfristigem Über- oder Untersteuern des Sollwerts und damit der leistungssteigernden Maßnahme. Dabei bleibt die eigentliche Regelgröße (hier: Leistung) trotzdem von Anfang an auf dem Zielsollwert, was dem System eine sehr hohe Eigenstabilität bzw. Fehlertoleranz gegenüber Parametrierungsungenauigkeiten verleiht.

Diesen Effekt einer höheren oder niedrigeren Verstärkung kann man außerdem dazu nutzen, die Gasturbine schneller oder langsamer wieder in den Regelbereich zurückzubringen, um z.B. bei höherer Verstärkung schneller wieder in vollem Umfang auf Frequenzänderungen reagieren zu können oder bei niedrigerer Verstärkung in Summe wirkungsgradoptimal zu fahren.

Das neuartige Automatisierungskonzept benötigt keine aufwändige Wärmebilanz und auch keinen zusätzlichen Korrekturregler mehr. Durch die systemimmanente Rückkopplung über den Frischdampfdruck ist keine aufwändige Optimierung vor Ort mehr notwendig.

Damit ergibt sich sowohl für das Engineering als auch für die spätere Inbetriebnahme vor Ort ein deutlich geringerer Aufwand.

Im Gegensatz zu einem Konzept mit Wärmebilanz und Korrekturregler oder händischer Bedienung wird mit dem vorgestellten neuen Konzept ein geänderter Zielwert sofort punktgenau angefahren.

Mit dem alten Konzept würde zunächst basierend auf der Wärmebilanz vorgesteuert ein entsprechender Schätzwert angefahren und anschließend über den langsamen Korrekturregler beispielsweise ein Druck ausgeregelt werden. Dadurch wird der geänderte Zielsollwert immer langsamer erreicht werden als mit dem vorgestellten neuen Konzept.

Das erfindungsgemäße Verfahren ist nicht auf die ausschließliche Erzeugung elektrischer Energie beschränkt. Andere Anwendungen, wie beispielsweise Prozessdampfauskopplung, sind ebenfalls umfasst.

Die Erfindung wird beispielhaft anhand der Zeichnungen näher erläutert. Es zeigen schematisch und nicht maßstäblich:
Figur 1 eine Kraftwerksanlage und
Figur 2 die Regelung nach der Erfindung für den Betrieb der Kraftwerksanlage.

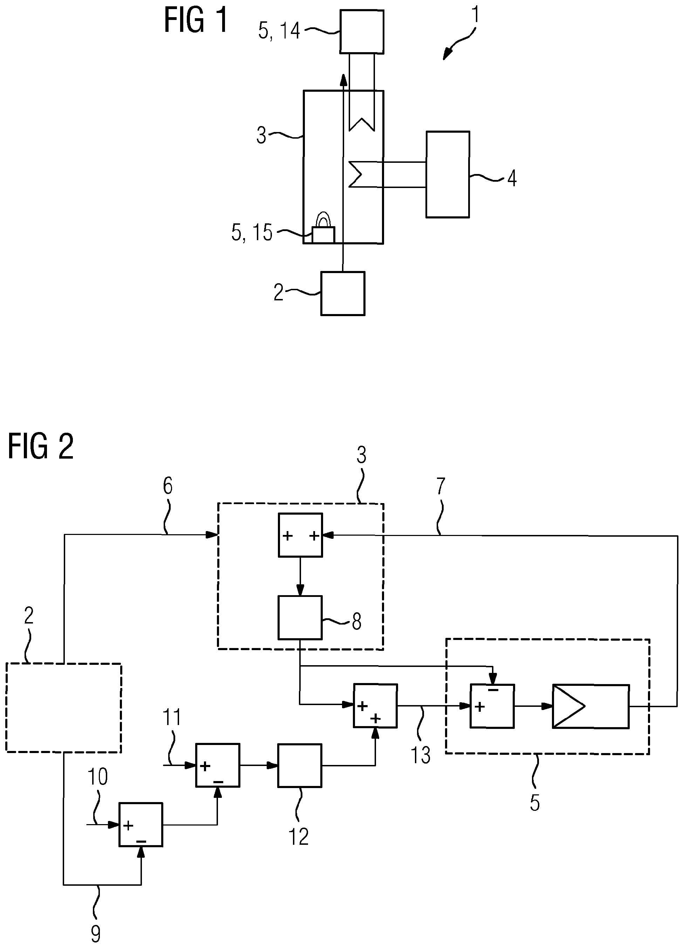

Die Figur 1 zeigt eine Kraftwerksanlage 1 mit einer Gasturbine 2, einem Abhitzedampferzeuger 3, einer Dampfturbine 4 und einer Zusatzfeuerung 15 als zusätzliche Wärmequelle 5. Die Gasturbine 2 und die Zusatzfeuerung 15 dienen dabei als Wärmequellen für den der Gasturbine 2 nachgeschalteten Abhitzedampferzeuger 3, in dem Frischdampf für die Dampfturbine 4 erzeugt wird. Mittels Ausspeicherung aus einem Wärmespeicher 14 kann zusätzlich zur Zusatzfeuerung 15 Wärme eingebracht werden. Der Wärmespeicher 14 kann dabei, wie dargestellt, innerhalb des Abhitzedampferzeugers 3 angeordnet sein, aber auch außerhalb.

Figur 2 zeigt die erfindungsgemäße Regelung für die Kraftwerksanlage 1. Dabei erfährt der Abhitzedampferzeuger 3 im Betrieb der Kraftwerksanlage 1 einen Wärmeeintrag 6 seitens der Gasturbine 2 und ggf. einen Wärmeeintrag 7 seitens der zusätzlichen Wärmequelle 5. Daraus ergibt sich ein Druckistwert 8.

Im Hinblick auf die Gasturbine 2 sind Istleistung 9 und Maximalleistung 10 bekannt. Es wird die Differenz dieser Werte ermittelt. Ggf. muss, insbesondere in Inselnetzen, noch für Netzfrequenz-stabilisierende Maßnahmen eine Reserve vorgehalten werden, so dass die Gasturbine 2 im Betrieb nicht bis zur technisch möglichen Maximalleistung 10, sondern lediglich bis zu einer unter der Maximalleistung 10 liegenden Regelbereichsgrenze 11 gefahren wird.

Aufgrund einer linearen Abhängigkeit des Dampfstromes (und der Dampfturbinenleistung) nur vom Vordruck wird aus den Werten für die Gasturbine über eine Verstärkung 12 ein Drucksollwert 13 für den Dampfdruck unmittelbar vor der Dampfturbine 4 bestimmt. Dieser Drucksollwert dient dann je nach Leistungsanforderung an die Kraftwerksanlage 1 als Zielvorgabe für die Gasturbine 2 oder im Falle, dass die Gasturbine 2 bereits im oberen Regelbereich gefahren wird, für die zusätzliche Wärmequelle 5.

## Patentansprüche

1. Verfahren zum Betreiben einer Kraftwerksanlage (1) mit einer Gasturbine (2), einem der Gasturbine (2) nachgeschalteten Abhitzedampferzeuger (3), einer mit dem Abhitzedampferzeuger (3) verbundenen Dampfturbine (4), sowie einer im Abhitzedampferzeuger angeordneten Zusatzfeuerung (15), wobei zum Erreichen einer vorgegebenen Kraftwerksanlagenleistung ein Drucksollwert unmittelbar vor der Dampfturbine (4) eingestellt wird, **dadurch gekennzeichnet, dass** der Drucksollwert ein Sollwert für die Zusatzfeuerung ist.

2. Verfahren nach Anspruch 1, wobei der Drucksollwert von einem Status eines primären Regelorgans abgeleitet wird.

3. Verfahren nach Anspruch 2, wobei das primäre Regelorgan eine Gasturbinenleistung ist.

4. Verfahren nach einem der vorhergehenden Ansprüche, wobei als zusätzliche Wärmequelle ein Wärmespeicher (14) verwendet wird und bei Bedarf Wärme aus dem Wärmespeicher (14) ausgespeichert wird.

5. Verfahren nach Anspruch 2, wobei eine Änderung im Status des primären Regelorgans über eine Verstärkung in eine Drucksollwertänderung umgerechnet wird, welche auf einen aktuellen Istdruck addiert wird.

6. Verfahren nach einem der vorhergehenden Ansprüche, wobei die Zusatzfeuerung (15) nur dann betrieben wird, wenn ein Kraftwerksanlagenleistungssollwert nicht alleine durch die Gasturbine (2) innerhalb ihres Regelbereichs und die Dampfturbine (4) erreicht oder gehalten werden kann.

## Claims

1. Method for operating a power plant (1) having a gas turbine (2), a heat recovery steam generator (3) connected downstream of the gas turbine (2), a steam turbine (4) connected to the heat recovery steam generator (3), and an auxiliary burner (15) arranged in the heat recovery steam generator, wherein a target pressure value is set immediately upstream of the steam turbine (4), in order to achieve a predefined power plant capacity, **characterized in that** the target pressure value is a target value for the auxiliary burner.

2. Method according to Claim 1, wherein the target pressure value is deduced from a status of a primary control element.

3. Method according to Claim 2, wherein the primary control element is a gas turbine capacity.

4. Method according to one of the preceding claims, wherein a heat store (14) is used as an auxiliary heat source and, if required, heat is released from the heat store (14).

5. Method according to Claim 2, wherein a change in the status of the primary control element is converted, by means of amplification, into a target pressure value variation, which is added to a current actual pressure.

6. Method according to one of the preceding claims, wherein the auxiliary burner (15) is only operated in the event that a target value for power plant capacity cannot be achieved or maintained by means of the gas turbine (2), within its control range, and the steam turbine (4) alone.

## Revendications

1. Procédé pour faire fonctionner une centrale (1) électrique, comprenant une turbine (2) à gaz, un générateur (3) de vapeur à récupération de la chaleur perdue monté en aval de la turbine (2) à gaz, une turbine (4) à vapeur reliée au générateur (3) de vapeur à récupération de la chaleur perdue ainsi qu'un foyer (15) supplémentaire monté dans le générateur de vapeur à récupération de la chaleur perdue, dans lequel, pour obtenir une puissance donnée à l'avance de la centrale électrique, on règle une valeur de consigne de la pression juste avant la turbine (4) à vapeur, **caractérisé en ce que** la valeur de consigne de la pression est une valeur de consigne pour le foyer supplémentaire.

2. Procédé suivant la revendication 1, dans lequel on déduit la valeur de consigne de la pression d'un état d'un organe de réglage primaire.

3. Procédé suivant la revendication 2, dans lequel l'organe de réglage primaire est une puissance de la turbine à gaz.

4. Procédé suivant l'une des revendications précédentes, dans lequel on utilise un accumulateur (14) de chaleur comme source de chaleur supplémentaire et en cas de besoin, on reprend de la chaleur de l'accumulateur (14) de chaleur.

5. Procédé suivant la revendication 2, dans lequel on transforme par le calcul une variation de l'état de l'organe de réglage primaire par une amplification en une variation de la valeur de consigne de la pression, que l'on ajoute à une pression réelle instantanée.

6. Procédé suivant l'une des revendications précédentes, dans lequel on ne fait fonctionner le foyer (15) supplémentaire que si une valeur de consigne de la puissance de la centrale électrique ne peut pas être atteinte ou maintenue seulement par la turbine (2) à gaz dans sa plage de réglage et par la turbine (4) à vapeur.
